Europäisches Patentamt

(19) European Patent Office

Office européen des brevets

(11) Numéro de publication: **0 063 993**
**B1**

(12) **FASCICULE DE BREVET EUROPEEN**

(45) Date de publication du fascicule du brevet:
**03.07.85**

(21) Numéro de dépôt: **82400667.0**

(22) Date de dépôt: **15.04.82**

(51) Int. Cl.⁴: **F 01 D 25/16,** F 16 C 27/04,
F 02 C 7/06

(54) **Dispositif de palier, en particulier pour turbomachines.**

(30) Priorité: **29.04.81 FR 8108516**

(43) Date de publication de la demande:
**03.11.82 Bulletin 82/44**

(45) Mention de la délivrance du brevet:
**03.07.85 Bulletin 85/27**

(84) Etats contractants désignés:
**DE FR GB**

(56) Documents cités:
**DE - C - 809 864**
**GB - A - 1 284 602**
**GB - A - 2 058 245**
**US - A - 2 875 001**
**US - A - 3 332 726**
**US - A - 3 485 538**
**US - A - 3 652 139**
**US - A - 4 084 861**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Forestier, Alexandre, 451, rue du Tertereau, F-77000 Vaux Le Penil (FR)**
Inventeur: **Lardellier, Joseph Alain Marie, 1, rue Augereau, F-77000 Melun (FR)**

(74) Mandataire: **Moinat, François et al, S.N.E.C.M.A. Service des Brevets Boîte Postale 81, F-91003 Evry Cedex (FR)**

ACTORUM AG

## Description

La présente invention concerne un dispositif de palier, en particulier pour turbomachines.

Lorsque les rotors de certaines turbomachines tournent à des vitesses élevées, proches du régime maximal, il risquerait d'apparaître des vibrations de grande amplitude si du moins tous les paliers du rotor étaient fixés très rigidement à leurs supports. Ces vibrations pourraient évidemment endommager la turbine.

Pour tenter de résoudre ce problème très grave, on a déjà imaginé de doter l'un des paliers au moins du rotor de la turbine d'une suspension élastique.

Les brevets français n° 1 342 674 et 1 346 653 de ROLLS-ROYCE LTD décrivent des paliers comportant chacun une cage d'écureuil, de forme générale cylindrique, réunissant élastiquement une bride, qui sert à sa fixation rigide au support du palier, avec la bague externe dudit palier; d'autre part, la bague externe du palier est entourée, avec un faible jeu, par une butée annulaire, également solidaire du support du palier, et disposée de façon à limiter les déplacements radiaux du palier, autorisés par l'élasticité de la cage d'écureuil réunissant sa bague externe au support rigide.

Le brevet français n° 1 424 222 de ROLLS-ROYCE LTD décrit un palier analogue, notamment pour turbine à gaz, dans lequel sont en outre prévus des moyens tendant à n'autoriser l'intervention des butées radiales que dans les cas de fonctionnement critiques.

Le brevet français n° 2 439 331 de GENERAL ELECTRIC CY décrit un palier pour arbre tournant, comportant également une cage d'écureuil à barreaux élastiques, dont les vibrations radiales peuvent être amorties par des amortisseurs hydrauliques appropriés.

Ces montages élastiques de palier ne comportant donc que des butées aménagées de façon à limiter les déplacements radiaux du palier, dans certains cas, sont toutefois insuffisants. En effet, dans le cas d'une turbomachine, il se présente fréquemment des conditions de fonctionnement d'un tel palier, à suspension élastique, pour lesquelles l'aménagement de butées radiales est insuffisant; en effet, si de telles butées radiales suffisent par exemple pour limiter les déplacements du palier dans certaines circonstances accidentelles, par exemple en cas de perte d'une ou plusieurs des aubes du rotor de la turbine, il s'avère nécessaire de prévoir également des butées pour limiter les déplacements du palier monté élastiquement, à la fois dans les directions circonférentielles et axiale; en effet, par exemple en cas de grippage du roulement d'un palier monté élastiquement, celui-ci est soumi à des efforts importants dans la direction circonférentielle, qui doivent être encaissés par des butées appropriées; de même, en cas de rupture d'une aube du rotor de la turbomachine, son palier monté élastiquement est soumis à des efforts axiaux, dirigés vers l'avant ou vers l'arrière, qui doivent également pouvoir être encaissés dans des conditions parfaitement sûres.

Il est connu également de faire appel à un amortissement par une pellicule d'huile créée dans un espace ménagé entre une bague de palier et son support. GB-A-1 284 602 prévoit un tel amortissement et prévoit dans les parties coopérantes de la bague et du support des dentures en V permettant l'amortissement dans le sens radial et dans le sens axial. US-A-3 485 538 décrit des moyens en vue de limiter des déplacements radiaux, circonférentiels et axiaux et associe dans ce but un amortissement par pellicule d'huile avec une bande métallique formant ressort et comportant des boucles selon une disposition particulière. Selon US-A-3 332 726, les pellicules d'huile d'amortissement sont formées entre des parties coopérantes annulaires et des cannelures associées sont utilisées pour le blocage circonférentiel.

L'invention tout en obtenant une limitation des déplacements radiaux, axiaux et circonférentiels du palier vise à éviter les contraintes et les inconvénients observés dans certaines applications qui sont dus à l'utilisation de pellicules d'huile d'amortissement.

Le dispositif de palier, en particulier pour turbomachine, selon la présente invention est du type comportant une cage d'écureuil, cylindrique ou à faible conicité, réunissant élastiquement une bride, qui sert à sa fixation rigide au support du palier, avec la bague externe dudit palier, laquelle est en outre entourée, avec un faible jeu, par une butée annulaire, solidaire dudit support, et disposée de façon à limiter les déplacements radiaux du palier. Le dispositif de palier selon la présente invention est caractérisé en ce que la bague externe du palier et la butée annulaire comportent respectivement des dentures radiales, de forme sensiblement parallélépipédique, engagée l'une dans l'autre avec un faible jeu, pour limiter les déplacements circonférentiels des deux pièces, et l'une ou l'autre desdites pièces est en outre munie de butées axiales, disposées avec de faibles jeux de part et d'autre des dents de l'autre pièce, pour limiter les déplacements axiaux des deux pièces, un jeu analogue au jeu radial existant entre la bague et la butée étant en outre ménagé entre les faces en regard des dents et de la bague, lesdites butées axiales de l'une des deux pièces étant constituées par deux dentures qui sont identiques à la denture de butée circonférentielle de l'autre pièce, et qui sont séparées par un intervalle axial, un peu supérieur à l'épaisseur axiale des dents de butée circonferentielle de l'autre pièce.

C'est donc au niveau de la butée annulaire destinée à limiter les déplacements radiaux du palier que sont également disposés les moyens nécessaires pour limiter ses déplacements circonférentiels et axiaux; la reprise des efforts liés à ces déplacements circonférentiels et axiaux du palier a donc lieu dans la même zone, et pratiquement par la même pièce, que la reprise des efforts liés à ses déplacements radiaux, ce qui est très avantageux du point de vue du dimensionnement, de la réduction de la masse et de la simplicité du dispositif du palier.

A titre d'exemple, on a décrit ci-dessous et illustré schématiquement aux dessins annexés, une forme de réalisation du dispositif de palier selon la présente invention.

La fig. 1 est une vue partielle, en coupe par un plan axial, de la première forme de réalisation.

La fig. 2 est une vue partielle en coupe suivant la ligne II-II de la fig. 1.

Les figures 3 et 4 sont des vues partielles en coupe suivant les lignes III-III et IV-IV de la fig. 2.

La fig. 5 est une vue partielle dans la direction de la flèche V de la fig. 4.

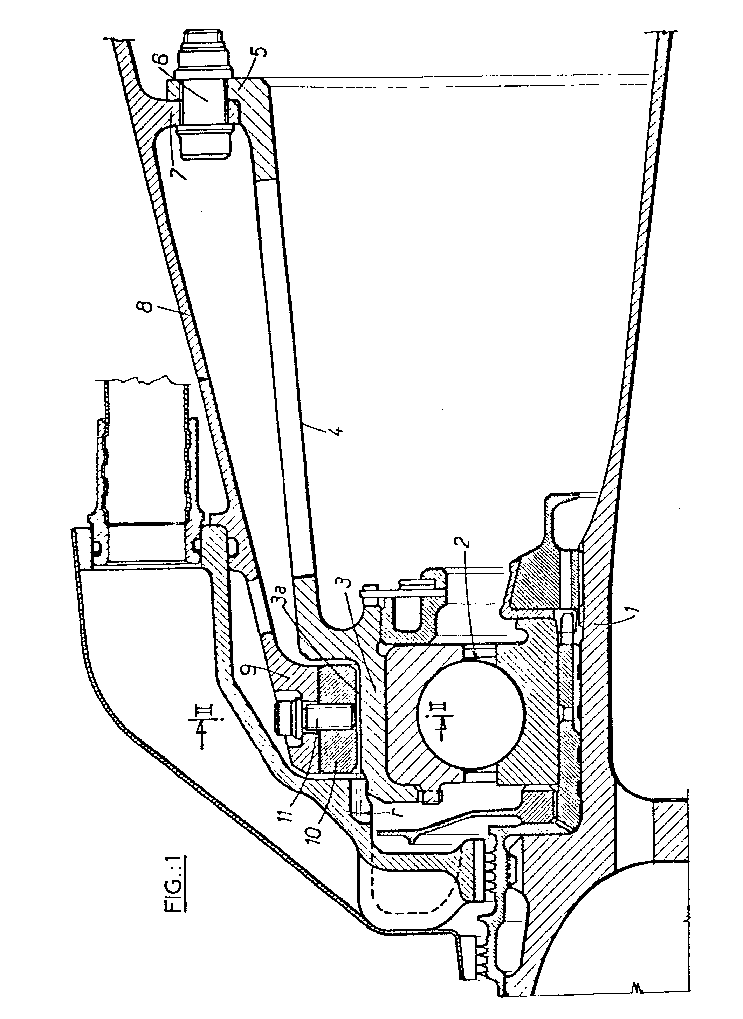

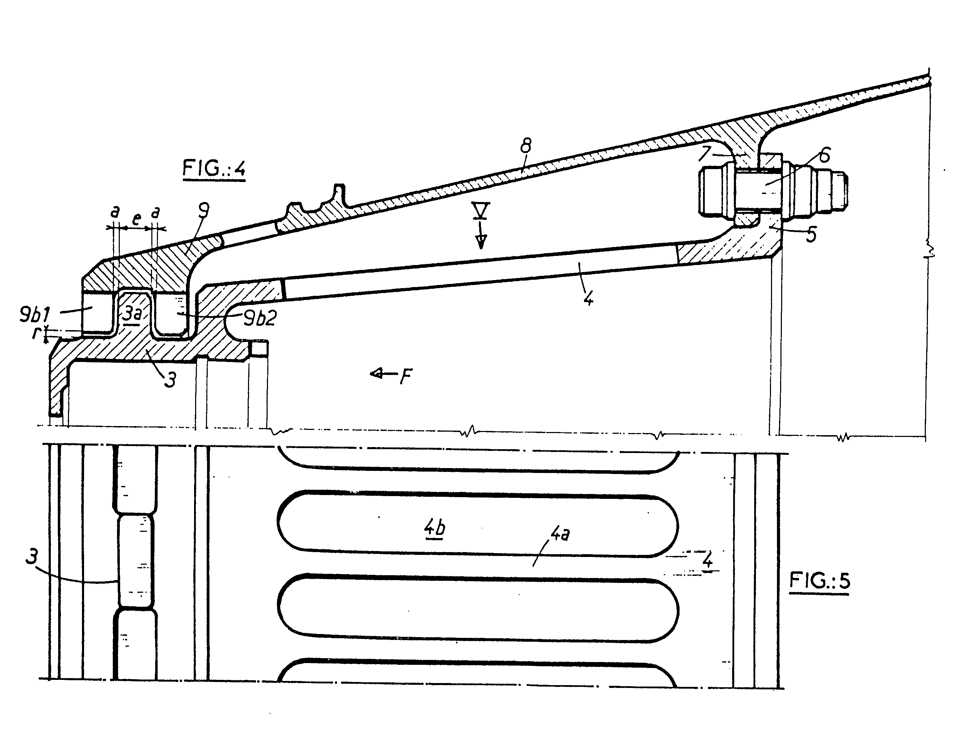

Sur les figures 1 à 4, on a désigné par 1 une partie du rotor d'une turbine, sur laquelle le roulement à billes 2 d'un palier est monté de façon classique, qu'il n'est donc pas nécessaire de décrire en détails. La bague externe 3 du palier comprenant le roulement 2 est réunie élastiquement, par une cage d'écureuil 4 (également visible sur la fig. 5) à une bride radiale 5, qui est tournée vers l'extérieur de la cage d'écureuil 4, et qui est fixée rigidement, par des boulons tels que 6, à une bride radiale 7, d'un support rigide 8, coaxial au rotor 1 et au palier 2. Dans la forme de réalisation considérée, la cage d'écureuil 4 présente une faible conicité, mais elle pourrait être également cylindrique, tandis que le support coaxial 8 présente une plus forte conicité. Au cas où les pièces 3 à 8 appartiennent à un palier chaud, notamment à un palier de turbine, ces pièces sont evidemment réalisées en materiaux capables de résister aux températures élevées auxquelles ils seront portés lors du fonctionnement de la turbine. Il s'agit généralement, tout au moins pour la cage d'écureuil 4, de matériaux métalliques; dans l'exemple illustré, cette cage d'écureuil est constituée essentiellement par des barreaux étroits 4a, délimités par des ouvertures larges, régulières, telles que 4b (fig. 5); à titre de variante, elle pourrait être aussi constitué essentiellement par des tiges métalliques, par exemple à section circulaire pleine; quelle que soit la réalisation de la cage d'écureuil 4, il est essentiel qu'elle soit dimensionnée de façon à présenter une certaine élasticité autorisant des déplacements radiaux d'amplitude faible, mais suffisante, de la bague externe 3 du palier par rapport à son support rigide 8. Au niveau de la bague externe 3 du palier, le support rigide 8 porte une butée annulaire 9, pratiquement indéformable, qui est par exemple venue de moulage avec le support 8. Comme on peut le voir sur les figures 1 et 4, la butée annulaire 9 et les clavettes 10 qui y sont fixées (fig. 1) sont conformées et dimensionnées de façon à s'étendre jusqu'à proximité de la surface annulaire externe 3a, de la bague externe 3 du palier, dont elles demeurent cependant écartées d'une très petite distance r, en particulier lorsque le rotor de la turbine est au repos. Ce «jeu radial» r est déterminé de telle façon que la butée annulaire 9 et les clavettes 10 qui y sont fixées limitent les déplacements radiaux éventuels du palier et de sa bague externe 3 lorsque, dans des conditions de fonctionnement particulièrement sévères, ledit palier et sa bague externe 3 sont soumis à des efforts radiaux intenses, dus par exemple à la perte d'une ou plusieurs des aubes du rotor de la turbine.

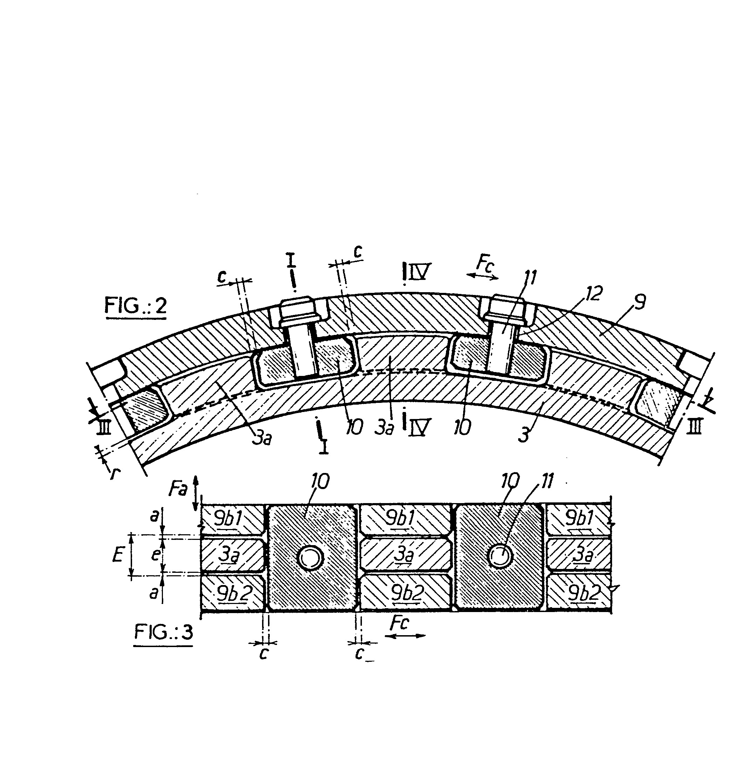

Selon la présente invention, la bague externe 3 du palier et la butée annulaire 9 sont réalisées de façon à limiter en outre les déplacements éventuels dudit palier dans les directions circonférentielle et axiale. Dans le cas de cette première forme de réalisation, ce résultat est obtenu de la façon suivante: comme visible notamment sur les vues en coupe des figures 2 et 3, la bague externe 3 et la butée annulaire 9 comportent respectivement des dentures radiales 3a et 10, engagées l'une dans l'autre avec un faible jeu c, de façon à limiter les déplacements circonférentiels des deux pièces 3 et 9, c'est-à-dire les déplacements éventuels, dans la direction circonférentielle indiquée par les doubles flèches Fc, du palier dont est solidaire la bague 3, par rapport à la butée annulaire fixe, 9. Dans cette forme de réalisation, les dents de butée circonférentielle de la butée annulaire 9 sont constituées par des pièces indépendantes de celle-ci, notamment les clavettes 10, déjà mentionnées, qui y sont fixées notamment par des vis 11, engagées de l'extérieur à travers des perçages radiaux 12 de ladite butée annulaire 9. D'autre part, la butée annulaire 9 est en outre munie de butées axiales, disposées, avec de faibles jeux a de part et d'autre des dents 3a de la bague externe 3. Dans la forme de réalisation considérée, ces butées axiales sont constituées par deux dentures 9b1 et 9b2 (fig. 3), qui sont identiques à la denture de butée circonférentielle 3a de la bague externe 3, et qui sont séparées par un intervalle axial E = e + 2a, e désignant l'épaisseur axiale des dents 3a. On voit enfin sur la fig. 3 que les «dents» 10 de la butée annulaire 9 ont une épaisseur axiale égale à E + 2e, dans la cas où les dents de butée axiale 9b1 et 9b2 de la butée annulaire 9 ont la même largeur axiale e que les dents de butée circonférentielle 3a de la bague externe 3. De ce fait, les clavettes 10, fixées à la butée annulaire 9, pénètrent dans les intervalles entre les dents successives de chacune des deux dentures de butée axiale 9b1 et 9b2 de ladite butée annulaire 9.

Pour faciliter le montage, il est en outre avantageux que la largeur circonférentielle des dents de la denture 3a soit un peu inférieur à la largeur circonférentielle des intervalles entre les dents des dentures 9b1 et 9b2. Dans ce cas, les clavettes 10 ont de préférence une largeur circonférentielle égale à celle des dents des dentures 3a, 9b1 et 9b2. Avec ce dimensionnement, l'ensemble formé par la bague externe 3 du palier, la cage d'écureuil 4 et la bride radiale 5 doit être monté à l'intérieur du support 8, avant la fixation des clavettes 10 à la butée annulaire 9, de la façon suivante: on approche la bague externe 3 de la butée annulaire 9 dans le sens de la flèche F (fig. 4) en orientant circonférentiellement ladite bague externe 3, et les pièces 4 et 5 dont elle est solidaire, de manière que ses dents 3a se trouvent en regard des intervalles de la denture 9b2 de la butée 9; on interrompt le déplacement axial de l'ensemble 3-4-5 dans le sens de la flèche F lorsque la denture 3a se trouve sensiblement au niveau de l'intervalle, de largeur e + 2a, entre les deux dentures 9b1 et 9b2 de la butée 9, comme visible sur la fig. 4; on fait alors pivoter l'ensemble 3-4-5 autour de son axe géométrique de manière à amener en coïncidence les dents des trois dentures 3a, 9b1 et 9b2, comme visible sur la fig. 3; il suffit ensuite d'engager les différentes clavettes 10 dans les intervalles coïncidents des trois dentures et de les fixer à la butée 9, en engageant de l'extérieur les vis 11, à travers les perçages radiaux 12. On peut ensuite assujettir la bride radiale 5 à la bride 7 au moyen des vis 6.

En cas de grippage du palier, la bague externe 3 est soumise à des efforts intenses dans la direction circonférentielle de la double flèche Fc (figures 2 et 3), si bien que les flancs droits ou gauches de ses dents 3a viennent en butée contre les côtés correspondants des clavettes 10, ce qui a pour effet de supprimer l'un des deux jeux circonférentiels c qui est établi normalement entre chacune des clavettes 10 et les deux dents voisines 3a.

La reprise des efforts circonférentiels que le palier transmet à sa bague externe 3 a lieu dans d'excellentes conditions, sur la grande surface de contact entre le flanc de chaque dent 3a et le côté correspondant de la clavette 10 voisine, et cela d'autant mieux pour un nombre de dents et de clavettes plus élevé permettant toutefois de leur conserver une épaisseur suffisante. De même, en cas de rupture d'aubes, le palier transmet des efforts axiaux intenses à la bague 3, dont les dents 3a se déplacent dans un des sens de la double flèche Fa (fig. 3), jusqu'à venir en butée contre la denture correspondante 9b1 ou 9b2 de la butée annulaire 9, le jeu axial correspondant a étant supprimé. Dans ce cas encore, les efforts axiaux sont repris sur des surfaces importantes.

Cette forme de réalisation est susceptible de nombreuses variantes, entrant toutes dans le cadre de l'invention. Il n'est pas indispensable que les clavettes 10 présentent une épaisseur axiale supérieure à celle des dents 3a de la bague externe 3; en particulier, leur largeur axiale peut être limitée de telle façon qu'elles ne pénètrent pas dans les intervalles de la denture 9b1.

Dans une autre variante, les clavettes 10 sont remplacées par des dents venues de moulage avec la butée annulaire 9, et identiques aux dents 3a de la bague externe 3, c'est-à-dire présentant notamment la même largeur axiale a (fig. 3); le montage de l'ensemble 3-4-5 dans le support 8 est dans ce cas facilité et rendu plus rapide par la suppression des clavettes 10. Bien entendu, les butées axiales, constituées par des dentures comme sur la fig. 3, au lieu d'être solidaires de la butée annulaire 9, pourraient l'être de la bague externe 3. Les deux butées, ou jeux de butées axiales, pourraient aussi être solidaires , l'un de la butée annulaire 9 et l'autre de la bague externe 3.

## Revendications

1. Dispositif de palier, en particulier pour turbomachines, comportant une cage d'écureuil (4), cylindrique ou à faible conicité, réunissant élastiquement une bride (5), qui sert à sa fixation rigide au support du palier (8), avec la bague externe (3) dudit palier, laquelle est en outre entourée, avec un faible jeu, par une butée annulaire (9), solidaire dudit support (8), et disposée de façon à limiter les déplacements radiaux du palier (2), caractérisé en ce que la bague externe (3) du palier (2) et la butée annulaire (9) comportent, respectivement, des dentures radiales (3a et 10), de forme sensiblement parallélépipédique, engagées l'une dans l'autre avec un faible jeu (c), pour limiter les déplacements circonférentiels des deux pièces (3 et 9) et que l'une ou l'autre desdites pièces (3 et 9) est, en outre, munie de butées axiales (9b1, 9b2), disposées avec de faibles jeux (a) de part et d'autre des dents (3a ou 10) de l'autre pièce, pour limiter les déplacements axiaux des deux pièces (3 et 9), un jeu analogue au jeu radial existant entre la bague (3) et la butée (9) étant en outre ménagé entre les faces en regard des dents (10) et de la bague (3), lesdites butées axiales de l'une des deux pièces (9) étant constituées par deux dentures (9b1, 9b2) qui sont identiques à la denture de butée circonférentielle (3a) de l'autre pièce (3), et qui sont séparées par un intervalle axial (e + 2a), un peu supérieur à l'épaisseur axiale (e) des dents (3a) de butée circonférentielle de l'autre pièce (3).

2. Dispositif de palier selon la revendication 1, caractérisé en ce que les dents (10) de butée circonférentielle de la pièce (9) qui est également munie de dents (9b1, 9b2) de butée axiale, ont une largeur circonférentielle telle qu'elles pénètrent dans les intervalles entre lesdites dents (9b1, 9b2) de butée axiale de la même pièce (9).

3. Dispositif de palier selon l'une quelconques des revendications 1 à 2, caractérisé en ce que les dents de butée circonférentielle de la butée annulaire (9) sont formées par des clavettes (10), de préférence en forme de parallélépipèdes droits, qui sont fixées sur ladite butée annulaire (9), par exemple par des vis (11), engagées de l'extérieur à travers des perçages radiaux (12) de la butée annulaire (9).

## Patentansprüche

1. Lageranordnung, insbesondere für Turbomaschinen, mit einem zylindrischen oder leicht konischen Käfig (4), der einen Flansch (5), welcher zur starren Befestigung an der Lagerstütze (8) dient, elastisch mit dem Aussenring (3) des Lagers verbindet, wobei dieser Aussenring (3) ausserdem mit leichtem Spiel von einem ringförmigen Gegenlager (9) umgeben ist, welches mit der Lagerstütze (8) fest verbunden und derart angeordnet ist, dass es die radialen Verschiebungen des Lagers (2) begrenzt, dadurch gekennzeichnet,
dass der Aussenring (3) des Lagers (2) bzw. das ringförmige Gegenlager (9) annähernd quaderförmige radiale Verzahnungen (3a und 10) besitzen, die mit leichtem Spiel (c) ineinander greifen und die in Umfangsrichtung verlaufenden Verschiebungen der beiden Teile (3 und 9) begrenzen,
dass das eine oder das andere der genannten Teile (3 und 9) ausserdem axiale Anschläge (9b1, 9b2) aufweist, die mit leichtem Spiel (a) zu beiden Seiten der Zähne (3a oder 10) des anderen Teils derart angeordnet sind, dass sie axiale Verschiebungen der beiden Teile (3 und 9) begrenzen, wobei ein dem radialen Spiel zwischen dem Aussenring (3) und dem ringförmigen Gegenlager (9) analoges Spiel zwischen den einander gegenüberliegenden Flächen der Zähne (10) und des Aussenrings (3) vorgesehen ist, und dass die axialen Anschläge des einen der beiden Teile (9) von zwei Verzahnungen (9b1, 9b2) gebildet sind, die in derselben Weise ausgebildet sind wie die den Anschlag in Umfangsrichtung bildende Verzahnung (3a) des anderen Teils (3) und die durch einen axialen Zwischenraum (e + 2a) voneinander getrennt sind, der geringfügig grösser ist als die axiale Dicke (e) der den Anschlag in Umfangsrichtung bildenden Zähne (3a) des anderen Teils (3).

2. Lageranordnung nach Anspruch 1, dadurch gekennzeichnet, dass die als Anschlag in Umfangsrichtung wirkenden Zähne (10) desjenigen Teils (9), das auch die als axialer Anschlag wirkenden Zähne (9b1, 9b2) aufweist, in Umfangsrichtung eine solche Breite haben, dass sie in die Zwischenräume zwischen die den axialen Anschlag bildenden Zähne (9b1, 9b2) desselben Teils (9) eindringen.

3. Lageranordnung nach Anspruch 1 oder 2, dadurch gekennzeichnet, dass die als Anschlag in Umfangsrichtung wirkenden Zähne des ringförmigen Gegenlagers (9) von vorzugsweise quaderförmigen Keilen (10) gebildet sind, die an dem ringförmigen Gegenlager (9) z.B. durch Schraubbolzen (11) befestigt sind, welche von aussen durch radiale Öffnungen (12) des ringförmigen Gegenlagers (9) greifen.

## Claims

1. Bearing assembly, in particular for turbo-machines, comprising a squirrel cage (4), cylindrical or slightly conical, resiliently interconnecting a collar (5), which is used for fixing it rigidly to the bearing support (8), with the outer race (3) of said bearing, which is in addition surrounded, with a small amount of play, by an annular thrust member (9) rigid with said support (8) and disposed in such a manner as to limit the radial movements of the bearing (2), characterised in that the outer race (3) of the bearing (2) and the annular thrust member (9) have, respectively, radial arrays of teeth (3a, and 10) of substantially parallelepiped shape, engaged one into the other with a small amount of play (c), to limit the circumferential movements of the two parts (3 and 9) and in that either of said parts (3 and 9) is, in addition, provided with axial thrust blocks (9b1, 9b2), disposed with small amounts of play (a) on either side of the teeth (3a or 10) of the other part, to limit the axial movements of the two parts (3 and 9), an amount of play similar to the radial amount of play between the race (3) and the thrust block (9) being in addition provided between the facing sides of the teeth (10) and the race (3), said axial thrust blocks of either of the two parts (9) being constituted by two arrays of teeth (9b1, 9b2) which are identical with the circumferential thrust block array of teeth (3a) of the other part (3), and which are separated by an axial gap (e + 2a), slightly greater than the axial thickness (e) of the circumferential thrust teeth (3a) of the other part (3).

2. Bearing assembly according to claim 1, characterised in that the circumferential thrust teeth (10) of the part (9) which is also fitted with axial thrust teeth (9b1, 9b2), have a circumferential width such that they enter the gaps between said axial thrust teeth (9b1, 9b2) of the same part (9).

3. Bearing assembly according to either of claims 1 or 2, characterised in that the circumferential thrust teeth of the annular thrust block (9) are formed by keys (10), preferably in the form of straight parallelepipeds, which are fixed on said annular thrust block (9), for example by means of screws (11), engaged from outside through radial bores (12) in the annular thrust block (9).

FIG.:1

FIG.:2

FIG.:3

FIG.:4

FIG.:5

9b1
3a
9b2

9
8
7
6
5
4

F

3

4b
4a
4

0 063 993